(19) Europäisches Patentamt

European Patent Office

Office européen des brevets

(11) **EP 0 582 132 B1**

(12) **EUROPÄISCHE PATENTSCHRIFT**

(45) Veröffentlichungstag und Bekanntmachung des Hinweises auf die Patenterteilung:
**16.10.1996 Patentblatt 1996/42**

(51) Int Cl.6: **C21D 8/08**, C22C 38/16

(21) Anmeldenummer: **93111665.1**

(22) Anmeldetag: **21.07.1993**

(54) **Baustahl, insbesondere Betonstahl und Verfahren zu seiner Herstellung**

Structural steel, especially concrete reinforcing steel and method of manufacturing

Acier de construction, notamment acier à béton et procédé pour sa fabrication

(84) Benannte Vertragsstaaten:
**AT CH DE DK ES FR GB IT LI LU SE**

(30) Priorität: **22.07.1992 DE 4224222**

(43) Veröffentlichungstag der Anmeldung:
**09.02.1994 Patentblatt 1994/06**

(73) Patentinhaber: **INSTITUT FÜR STAHLBETON BEWEHRUNG E.V.**
**D-81241 München (DE)**

(72) Erfinder:
• **Die Erfinder haben auf ihre Nennung verzichtet**

(74) Vertreter: **Blumbach, Kramer & Partner**
**Patentanwälte**
**Radeckestrasse 43**
**81245 München (DE)**

(56) Entgegenhaltungen:
WO-A-86/02667          BE-A- 854 647
DE-A- 2 411 120        US-A- 3 303 061
US-A- 3 909 251

• **PATENT ABSTRACTS OF JAPAN vol. 16, no. 249 (C-948)8. Juni 1992 & JP-A-04 056 725 (SUMITOMO METAL INDUSTRIES) 24. Februar 1992**

**Beschreibung**

Die Erfindung betrifft einen Baustahl, insbesondere Betonstahl der im Oberbegriff des Patentanspruches 1 angegebenen Art. Ferner bezieht sie sich auf ein Verfahren zu seiner Herstellung.

Baustähle bzw. Betonstähle werden zum größten Teil aus Stahlschrott erschmolzen. Dieser, insbesondere Automobilschrott, enthält einen unerwünscht hohen Anteil an Kupfer. Dies führt zu Kupfergehalten in der Schmelzenanalyse von 0,6 bis 0,7 Massen-%, im Extremfall bis zu 0,8 Massen-%.

Beim Warmwalzen von Stählen mit dem genannten hohen Kupfergehalt können Schwierigkeiten auftreten. Diese werden verursacht durch Anreicherungen von Kupfer unter der Oxidationsschicht des Eisens, z.B. im Walzwerksofen, in dem die Knüppel auf Walztemperatur erhitzt werden.

Die Anreicherung entsteht, da Kupfer nicht so schnell wie Eisen oxidiert. Das führt dazu, daß sich eine kupferreiche Phase an der auf der Stahloberfläche aufliegenden FeO-Schicht bildet.

Bei Temperaturen < 900°C ist diese Phase (bestehend aus 95% Cu, 5% Fe) in der Eisenoxid-Schicht zu finden, während sie sich bei höheren Temperaturen (1050°C - 1200°C) direkt an der Stahloberfläche ansiedelt. Ein Eindringen längs der Austenit-Korngrenzen findet wegen des hohen Benetzungsgrades statt.

Diese Erscheinung kann beim Warmwalzen direkt zur Rißbildung führen, wenn die Temperatur bei der Verarbeitung den Schmelzpunkt der ausgeschiedenen kupferreichen Phase überschreitet. Außerdem wird das Verformungsvermögen des Stahls beeinträchtigt. Wegen der nachteiligen Auswirkungen ist in den Normen, wie z.B. EN 10020, oder den Zulassungen der Kupfergehalt des Baustahls in der Schmelzenanalyse auf 0,4% begrenzt.

Die Entfernung von Kupfer aus der Schmelze ist nur mit einem sehr hohen Aufwand möglich und kommt aus Wirtschaftlichkeitsgründen für Massenstähle nicht in Frage.

Die Druckschrift US-A 3,303,061 offenbart einen einen niedrigen Kohlenstoffgehalt aufweisenden Stahl, der als essentielle Legierungskomponenten neben Kohlenstoff, Nickel, Kupfer und (zum Rest) Eisen 0,35 bis 0,75 % Molybdän, 0,01 bis 0,40 % (säurelösliches) Aluminium und 0,002 bis 0,008 % Bor enthält. Dieser Stahl kann bei relativ niedrigen Temperaturen gehärtet werden und ergibt eine für Strukturstähle ungewöhnlich hohe Härte und Festigkeit des Stahls, ohne daß eine ein Abschrecken oder andere drastische Temperatursprünge umfassende Hitzebehandlung notwendig ist.

Druckschrift DE-A 24 11 120 offenbart für den Schiffsbau geeignete, schweißbare Stähle hoher Festigkeit, die neben 0,4 bis 0,8 % Nickel, 0,7 bis 1,1 % Kupfer, 0,01 bis 0,09 % Kohlenstoff, 0,02 bis 0,1 % Niob, 1,1 bis 1,65 % Mangan, 0 bis 0,6 % Silicium, 0 bis 0,5 % Molybdän, 0 bis 0,01 % Bor, 0 bis 0,08 % Aluminium, 0 bis 0,1 % mindestens eines der Elemente Zirkon, Magnesium, Calcium und Seltenerd-Elemente und zum Rest Eisen auch 0 bis 0,5 % Chrom enthalten können. Die für die vorliegende Erfindung wesentliche Erkenntnis, unter welchen Bedingungen auch kupferreicher Automobilschrott zur Baustahl-Herstellung verwendet werden kann, findet in der genannten Druckschrift schon wegen der unterschiedlichen Verwendungsweise der Stähle keine Entsprechung.

Aufgabe der Erfindung ist es, die durch einen höheren Kupfergehalt in der Schmelzenanalyse des Baustahls, insbesondere Betonstahls, verursachten nachteiligen Auswirkungen durch Beeinflussung des Stahlgefüges bei der Herstellung des Endproduktes zu beseitigen und einen Baustahl verfügbar zu machen, der trotz eines Kupfergehalts bis zu 0,8 Gew.-% in der Schmelzenanalyse die Gütevorschriften in den Normen für solche Stähle erfüllt. Damit soll Stahlschrott, insbesondere Automobilschrott ohne aufwendige Reduzierung des Kupfergehalts in der Schmelze der Herstellung von Massenstählen zugänglich gemacht werden.

Der erfindungsgemäße Stahl ist durch die Merkmale des Anspruchs 1 gekennzeichnet. Vorteilhafte Ausgestaltungen sind den Ansprüchen 2 bis 4 zu entnehmen. Ein Verfahren zur Herstellung derartiger Stähle ist im Anspruch 5 beschrieben. Weiterbildungen dieses Verfahrens sind Anspruch 6 zu entnehmen.

Durch Untersuchungen wurde festgestellt, daß im Hinblick auf die Vermeidung negativer Auswirkungen eines höheren Kupfergehalts Schwefel, Zinn, Mangan und Nickel eine wesentliche Rolle spielen. Während Nickel die Löslichkeit von Kupfer in der Eisenmatrix und außerdem den Schmelzpunkt der kupferreichen Phase erhöht, was sich im Hinblick auf die Zielsetzung, eine kupferreiche Phase an der Stahloberfläche zu verhindern, günstig auswirkt, wird durch Zinn die Löslichkeit verringert. Durch das angegebene Verhältnis von Kupfer zu Nickel wird sichergestellt, daß ausreichend Nickel vorliegt um das Lösen des Kupfers in der Matrix zu gewährleisten.

Die Obergrenze für Mangan ist eingeführt worden, um ein extremes Kornwachstum zu vermeiden.

Die in den Verfahrensansprüchen angegebenen Maßnahmen unterstützen die metallurgischen Maßnahmen im Sinne der Zielsetzung der vorliegenden Erfindung. Durch eine reduzierende Fahrweise im Walzwerksofen, in dem die Knüppel bzw. Blöcke auf die Walztemperatur aufgeheizt werden, und durch Einstellen der Temperatur der Blöcke bzw. Knüppel beim Austritt aus dem Walzwerksofen auf eine Temperatur innerhalb eines vorgegebenen Bereichs wird die Oxidation an der Oberfläche und damit die eingangs beschriebene Anreicherung von Kupfer niedrig gehalten. Auch die Walzendtemperatur beim Austritt aus dem letzten Walzgerüst soll innerhalb eines vorgegebenen Bereiches liegen, und der ausgewalzte Baustahl bzw. Betonstahl soll nach dem Verlassen des letzten Walzgerüstes möglichst schnell einer Kühlstrecke zum Abschrecken zugeführt werden, d.h. innerhalb einer Zeitdauer, die 1,2 Sekunden nicht überschreitet. An das Abschrecken des Stahls schließt sich vorzugsweise ein Anlassen mit der nach dem Abschrecken im Stahl noch vorhandenen Restwärme an.

Die Erfindung wird anhand einer Figur näher erläutert. Diese stellt schematisch ein Herstellungsverfahren für einen Betonstahl dar.

In einem Elektrolichtbogenofen 11 wird der zu verarbeitende Schrott geschmolzen und anschließend einer Pfanne 12 zugeführt. In der Pfanne 12 wird die Schmelze metallurgisch behandelt. Eine rechnergestützte Analysevorrichtung 13 bestimmt die Zusammensetzung der Schmelze in der Pfanne.

Nach Einstellung der Schmelzenanalyse auf die vorgeschriebenen Werte wird die Schmelze einer Stranggießanlage 14 zugeführt, in der sie zu Knüppeln gegossen wird.

Die Knüppel werden nun entweder einem Zwischenlager 18 oder unmittelbar einem Blockdrücker 16 und durch diesen einem als Stoßofen 17 ausgebildeten Walzwerkofen zugeführt.

Der Stoßofen 17 erwärmt die eingebrachten Knüppel auf Walztemperatur. Hierbei werden die Knüppel unter reduzierenden Bedingungen erwärmt, damit die Verzunderungsgeschwindigkeit gesenkt und unerwünschte Anreicherungen von Kupfer unter der Zunderschicht vermieden werden. Die reduzierenden Bedingungen werden dabei laufend durch $CO/CO_2$-Messungen kontrolliert.

Die Temperatur der Knüppel beim Austritt aus dem Stoßofen 17 beträgt zwischen 1080 und 1180°C, wobei die Knüppel nach dem Austritt aus dem Stoßofen 17 in bekannter Weise eine durch Walzgerüste 19 bis 34 gebildete Walzstraße passieren und zu Stabstahl gewalzt werden.

Die Austrittstemperatur aus dem letzten Walzgerüst 34 wird in Abhängigkeit vom Verformungsgrad, der Eintrittstemperatur der Knüppel in das erste Walzgerüst 19 und der Durchlaufgeschwindigkeit der zu Stabstahl zu walzenden Knüppel auf einen Wert zwischen 930 und 1000°C eingestellt. Sie wird unmittelbar nach dem letzten Walzgerüst 34 vor Eintritt in eine Kühlvorrichtung gemessen. Nachdem die Löslichkeit von Kupfer in Eisen bei hohen Temperaturen zunimmt und bei niedrigen absinkt, werden dadurch ebenfalls positive Werksstoffeigenschaften erreicht.

Die Kühlvorrichtung enthält eine Kühlstrecke 35 mit wasserbeaufschlagten Kühlrohren, durch die der Stabstahl mit hoher Geschwindigkeit hindurchgeführt wird. Der Stabstahl wird nach dem Verlassen der letzten Walzvorrichtung 34 bis zu max. 1,2 S im austenitischen Temperaturbereich gehalten, d.h. der Stabstahl wird umgehend der Kühlstrecke 35 zugeführt. Dadurch wird gewährleistet, daß sich durch Rekristallisation ein Gefüge mit relativ kleinen Austenitkörnern ausbildet und übermäßiges Kornwachstum verhindert wird.

In der Kühlstrecke 35 wird der Randbereich des Stabstahls auf ungefähr 150°C abgeschreckt. Sodann wird der Stabstahl in einer Selbstanlaßstrecke 36 angelassen. Zuvor wird er noch durch eine Schere 37 auf eine vorbestimmte Länge geschnitten. Der selbstangelassene Stabstahl kühlt dann in einem Rechenkühlbett 38 vollkommen ab und wird durch eine weitere Schere 39 auf Verkaufslänge geschnitten.

Durch die oben erwähnte Werkstoffzusammensetzung und durch das beschriebene Verfahren ist Baustahl, insbesondere Betonstahl, mit höheren Kupferwerten herstellbar, der den bisher geltenden Anforderungen an die Werkstoffeigenschaften, wie statische Festigkeit, Dauerschwingfestigkeit, Biegevermögen und Rückbiegefähigkeit gerecht wird.

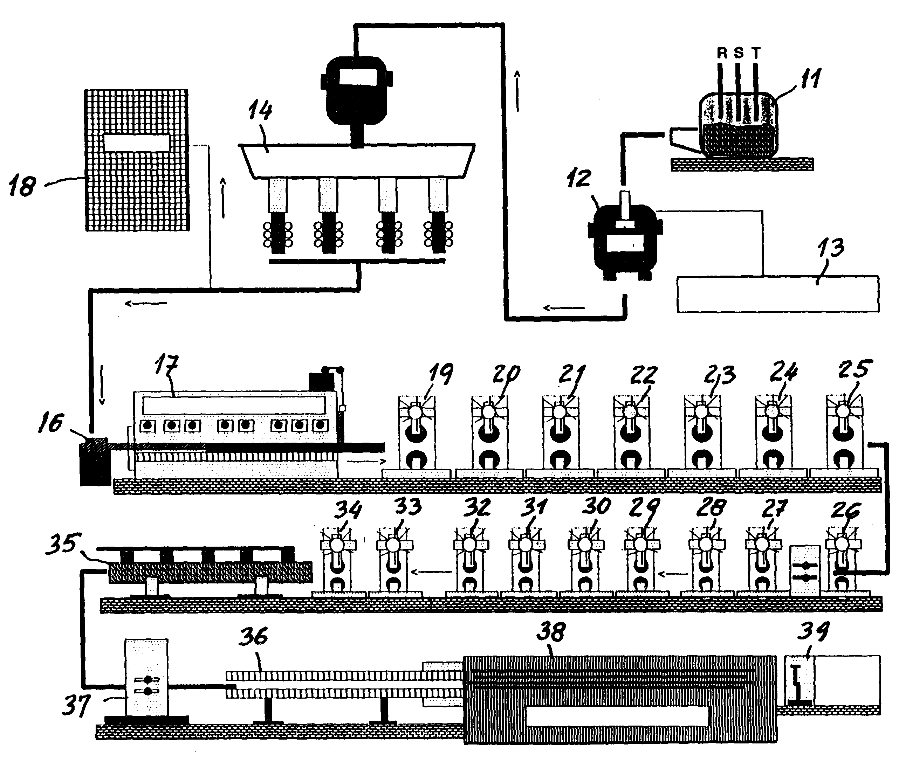

## Patentansprüche

1. Warmgewalzter Baustahl, insbesondere Betonstahl, bestehend aus

   0,05 bis 0,45 % C;
   0,5 bis 1,3 % Mn;
   0,05 bis 0,6 % Si;
   $\geq$ 0,3 % Cu;
   S und Sn in einer Menge, die der Vorschrift Cu + 10 (S + Sn) $\leq$ 1,3 % genügt; und
   Ni in einer Menge, die der Vorschrift 2,5 $\leq$ Cu / Ni $\leq$ 6,0 genügt, und
   gegebenenfalls zusätzlich 0,05 % bis 0,45 % Cr

   und zum Rest Fe und üblichen Verunreinigungen, wobei die Mengen aus einer Schmelzenanalyse erhalten werden.

2. Baustahl nach Anspruch 1, worin die Schmelzenanalyse ferner der Vorschrift

   $$Cu / Ni + 10 (S + Sn) \leq 6,8$$

   genügt.

3. Baustahl nach Anspruch 1 oder 2, worin der Anteil an C im Bereich von

   $$0,06 \% \leq C \leq 0,27 \%$$

   liegt.

4. Baustahl nach einem der Ansprüche 1 bis 3, welcher Cu in einer Menge im Bereich von 0,3 % bis 0,8 % enthält.

5. Verfahren zur Herstellung eines Baustahls, insbesondere eines Betonstahls, nach einem der Ansprüche 1 bis 4, bei dem aus einem flüssigen Stahl der genannten Schmelzenanalyse gegossenes Vormaterial in einem Walzwerksofen erwärmt und anschließend in einer Walzstraße gewalzt, das fertige Profil-, Stab- oder Drahtmaterial abgeschreckt und mit der nach dem Abschrecken noch vorhandenen Restwärme angelassen wird, dadurch gekennzeichnet, daß das Aufheizen im Walzwerksofen in einer reduzierenden Atmosphäre erfolgt und die Temperatur des erhitzten Materials beim Austritt aus dem Walzwerksofen im Bereich zwischen 1080 und 1180 °C liegt.

6. Verfahren nach Anspruch 5, dadurch gekennzeichnet, daß die Austrittstemperatur aus dem letzten Walzgerüst der Walzstraße auf einen Wert zwischen 930 und 1000 °C eingestellt wird und das Walzgut spätestens 1,2 Sekunden nach dem Verlassen des letzten Walzgerüstes in eine Kühlstrecke eintritt.

**Claims**

1. Hot rolled structural steel, particularly concrete reinforcing steel, comprising

> 0.05 to 0.45% C;
> 0.5 to 1.3% Mn;
> 0.05 to 0.6% Si;
> $\geq 0.3\%$ Cu;
> S and Sn in an amount which satisfies the requirement $Cu + 10 (S + Sn) \leq 1.3\%$; and
> Ni in an amount which satisfies the requirement $2.5 \leq Cu/Ni \leq 6.0$ and optionally additionally 0.05% to 0.45% Cr

and the remainder Fe and conventional impurities, the amounts being obtained from a melt analysis.

2. Structural steel as claimed in Claim 1, wherein the melt analysis further satisfies the requirement

$$Cu/Ni + 10 (S + Sn) \leq 6.8.$$

3. Structural steel as claimed in Claim 1 or 2, wherein the proportion of C is in the range

$$0.06\% \leq C \leq 0.27\%.$$

4. Structural steel as claimed in one of Claims 1 to 3 which contains Cu in an amount in the range 0.3% to 0.8%.

5. Method of manufacturing a structural steel, particularly a concrete reinforcing steel, as claimed in one of Claims 1 to 4, in which starting material cast from a molten steel of the said melt analysis is heated in a rolling mill furnace and subsequently rolled in a rolling train, the finished profile, rod or wire material is chilled and tempered with the residual heat still present after chilling, characterised in that the heating in the rolling mill furnace is effected in a reducing atmosphere and the temperature of the heated material on leaving the rolling mill furnace is in the range between 1080 and 1180°C.

6. Method as claimed in Claim 5, characterised in that the exit temperature from the last rolling stand of the rolling train is adjusted to a value between 930 and 1000°C and the rolled material enters a cooling stage at most 1.2 seconds after leaving the last rolling stand.

**Revendications**

1. Acier de construction laminé à chaud, notamment acier pour béton, se composant de

> 0,05 à 0,45 % de C ;
> 0,5 à 1,3 % de Mn ;
> 0,05 à 0,6 % de Si ;
> $\geq 0,3$ % de Cu ;
> S et Sn en une quantité satisfaisant à la règle $Cu + 10 (S + Sn) \leq 1,3$ % et
> Ni en une quantité satisfaisant à la règle $2,5 \leq Cu/Ni \leq 6,0$, et
> le cas échéant additionnellement 0,05 % à 0,45 % de Cr

et finalement Fe et les impuretés usuelles, les quantités étant obtenues par l'analyse de la masse fondue.

2. Acier de construction selon la revendication 1, où l'analyse de la masse fondue satisfait en outre à la règle

$$Cu/Ni + 10(S+Sn) \leq 6,8.$$

3. Acier de construction selon la revendication 1 ou 2, où la proportion de C est comprise dans la fourchette de

$$0,06 \% \leq C \leq 0,27 \%.$$

4. Acier de construction selon une des revendications 1 à 3, contenant Cu en une quantité comprise dans la fourchette de 0,3 % à 0,8 %.

5. Procédé de production d'un acier de construction, notamment d'un acier pour béton, selon une des revendications 1 à 4, où un produit de départ coulé à partir d'un acier liquide ayant l'analyse de masse fondue citée est chauffé dans un four de laminoir et ensuite laminé dans un train de laminage, les profilés, les barres ou les fils finis sont trempés et sont recuits à l'aide de la chaleur résiduelle encore présente après la trempe, caractérisé en ce que le chauffage dans le four de laminoir s'effectue dans une atmosphère réductrice et que la température du matériau chauffé au sortir du four de laminoir est comprise dans la fourchette de 1 080 à 1 180°C.

6. Procédé selon la revendication 5, caractérisé en ce que la température au sortir de la dernière cage de laminoir du train de laminage est ajustée à une valeur comprise entre 930 et 1 000°C et que le produit laminé pénètre dans une section de refroidissement au plus tard 1,2 s après avoir quitté la dernière cage de laminoir.

EP 0 582 132 B1